# EUROPEAN PATENT SPECIFICATION

(11) **EP 2 363 334 B1**
(45) Date of publication and mention of the grant of the patent: **21.03.2012**
(21) Application number: 10380078.5
(22) Date of filing: 17.06.2010
(51) Int. Cl.: B62B 7/08, B62B 7/14

(54) **Articulated joint with locking means**
Drehgelenk mit Verriegelungseinrichtung
Joint articulé avec un dispositif de verrouillage

(30) Priority: 04.03.2010 ES 201030194 U
(43) Date of publication of application: 07.09.2011
(73) Proprietor: JANE, S.A., 08184 Palau Solità i Plegamans Barcelona (ES)
(72) Inventor: Jane Santamaria, Manuel, 08184 Palau Solità i Plegamans (Barcelona) (ES)
(74) Representative: Morgades y Manonelles, Juan Antonio

(56) References cited:
- WO-A1-00/06437
- WO-A2-2006/031115

## Description

### OBJECT OF THE INVENTION

Multiple articulation for several elements, with locking means.

### FIELD OF THE INVENTION

This articulation is mainly applicable to baby pushchairs comprising a frame and a seat, the frame being basically composed of a handlebar and two side legs holding the wheels, two front and two rear, with one articulation on each side.

### BACKGROUND OF THE INVENTION

Pushchairs of the indicated type are already known, in which the articulations are generally made up of four rotating juxtaposed discs to which are joined respectively, the handlebar, the front leg, the rear leg and the support for the coupling of the detachable seat (see WO-A-2006 031115).

These pushchairs have the drawback that to fold them, the seat must first be removed, which creates problems for the person carrying the pushchair principally if the child is sitting on it. In addition, the mechanisms that lock the disc rotation are complex and difficult to access for locking.

### SUMMARY OF THE INVENTION

The purpose of this invention is a multiple articulation of the described type, more simplified and of easy access to the locking device and which, in addition, allows the pushchair to be folded without needing to remove the seat, and because of its design, it automatically locks in the folded and unfolded positions of the pushchair.

For this purpose, the articulation comprises three rings, two corresponding to the front and rear legs holding the wheels and the third, corresponding to the handlebar arm, integrating the support for the detachable coupling of the seat, the edges of the three rings presenting tongues and grooves, these rings located rotating on a cylindrical shaft axially movable with tongues and grooves on its external edge that fit into those of the three rings, for locking and unlocking the rotation.

The cylindrical shaft is tubular and is coupled to a spring that pushes its active locking position, the cylindrical shaft being joined axially to a cable that runs along the handlebar arm and when it is pulled, with the handle on the arm, the cylindrical shaft moves to its passive unlocking position.

These and other characterising features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:

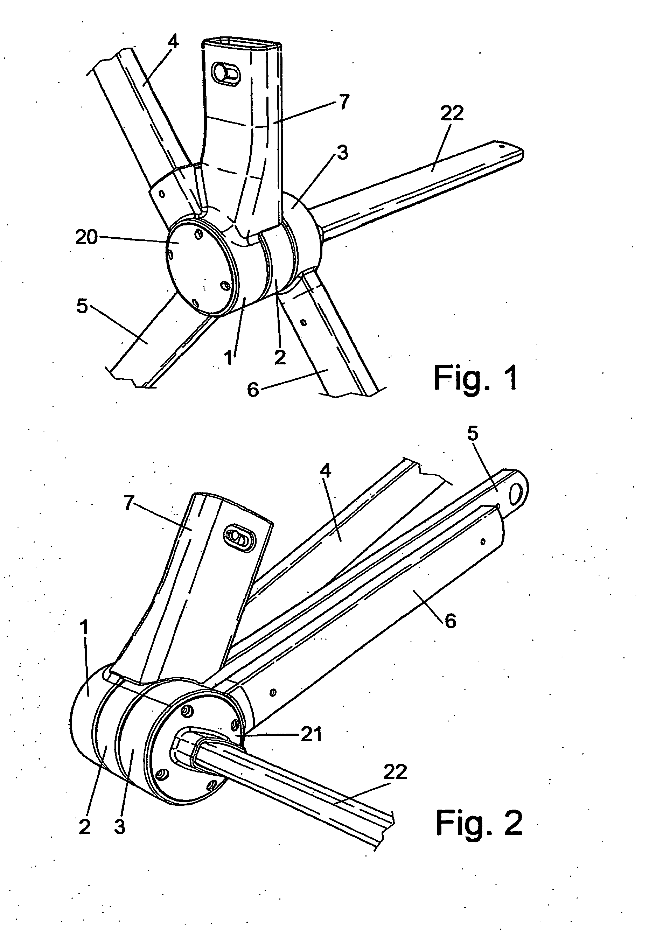

Figures 1 and 2 show a perspective view of the multiple articulation object of the invention, with its unfolded and folded elements, respectively,
Figure 3 shows a perspective exploded view of the components of the articulation, and
Figure 4 shows a cross-section view of the multiple articulation.

### DETAILED DESCRIPTION

According to the drawings, the multiple articulation object of the invention comprises three rings (1, 2 and 3), (1) corresponds to the arm (4) of the handlebar, (2) to the rear legs holding the wheel (5), and (3) to the front legs holding the wheel (6), the ring (1) presenting an integrated support (7) for the detachable coupling of the seat (not illustrated).

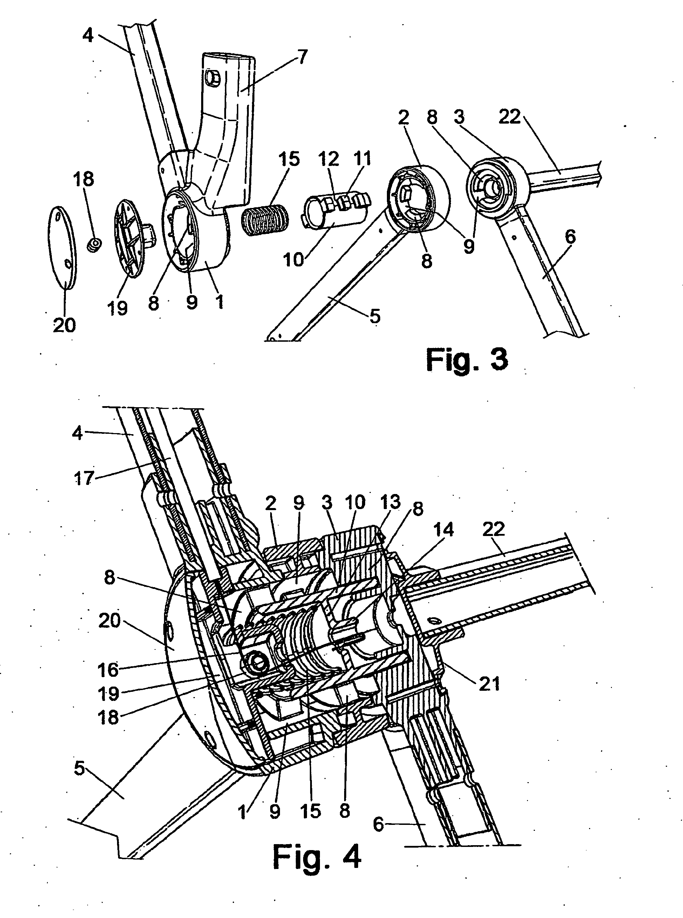

The three rings (1, 2 and 3) present on their edges interface tongues (8) and grooves (9) and are inserted by rotation on a cylindrical shaft (10) (Fig. 3) axially (movable) and with tongues (11) and grooves (12) on its external edge that fit to those of the three rings for locking and unlocking rotation.

The cylindrical shaft (10) is tubular and has an intermediate divider (13) (Fig. 4) with central hole (14), against this divider presses a spring (15) that pushed the cylindrical shaft to its active locking position. The cylindrical shaft (10) is linked axially to a cable (16) which with its sheath (17) runs along the inside of the arm (4) of the handlebar and when the cable is pulled, using a handle (not illustrated) on the upper part of the arm, it moves the cylindrical shaft (10) to its passive unlocked position, pressing the spring (15).

The cable (16) from the cylindrical shaft (10) to the handlebar arm (4) is guided angularly by a pulley (18) mounted on a plate (19) coupled to the external face of the ring (1).

The references (20 and 21) indicate the covers coupled, respectively to ring (1) and ring (3), the transversal shaft (22) being secured to the cover (21) that joins the multiple articulations multiples on each side of the pushchair frame.

The invention can within its essentiality be put into practice in other embodiments differing only in detail from the one having been described above only by way of example, said other embodiments also falling within the scope of the protection being claimed. This multiple articulation for several elements, with locking means may thus be manufactured in any shape and size, with the most suitable means and materials and with the most convenient accessories, and the components may be replaced by others that are technically equivalent, as far as all of this is contained within the scope of the claims.

## Claims

1. Multiple articulation for several elements, with locking means, applicable to baby pushchairs, comprising three rings (1, 2, 3), two corresponding to the front and rear legs (5, 6) holding the wheels and the third, corresponding to the handlebar arm (4), integrating the support (7) for the coupling of the seat, the edges of the three rings presenting tongues and grooves (8, 9), these rings located rotating on a cylindrical shaft (10) axially movable with tongues and grooves (11, 12) on its external edge that fit into those of the three rings, for locking and unlocking the rotation.

2. Multiple articulation for several elements, with locking means, according to claim 1, **characterised in that** the cylindrical shaft (10) is tubular and is coupled to a spring (15) that pushes its active locking position, the cylindrical shaft being joined axially to a cable (16) that runs inside the handlebar arm (4) and when it is pulled, the cylindrical shaft moves to its passive unlocking position.

3. Multiple articulation for several elements, with locking means, according to the preceding claim, **characterised in that** the ring (1) corresponding to the handlebar arm (4) and the seat support (7), on its external face, has a plate (19) bearing a pulley (18) through which the cable (16) runs at an angle.

## Patentansprüche

1. Mit Verriegelungsmitteln versehenes Mehrfachgelenk für mehrere Elemente, geeignet für Buggys und bestehend aus drei Ringen (1, 2, 3), von denen zwei zu den Vorder- und Hinterholmen (5, 6), an denen die Räder befestigt sind, gehören und der dritte für den Schiebebügelholm (4) bestimmt ist, wobei die Halterung (7) für die Ankopplung des Sitzes integriert ist, die drei Ringe an ihren Rändern Zapfen und Nuten (8, 9) aufweisen und auf einem axial verschiebbaren Zylinderschaft (10), der an seinem Außenrand mit Zapfen und Nuten (11, 12) versehen ist, die in die entsprechenden Zapfen und Nuten der drei Ringe passen und zur Ver- und Entriegelung der Drehbewegung dienen, drehbar gelagert sind.

2. Mit Verriegelungsmitteln versehenes Mehrfachgelenk für mehrere Elemente nach Anspruch 1, **dadurch gekennzeichnet, dass** der Zylinderschaft (10) röhrenförmig ausgebildet und mit einer Feder (15), welche die aktive Verriegelungsposition bewirkt, verkoppelt ist, wobei der Zylinderschaft axial mit einem Seil (16) verbunden ist, das durch das Innere des Schiebebügelholms (4) führt und beim Ziehen den Zylinderschaft in seine passive Entriegelungsposition bewegt.

3. Mit Verriegelungsmitteln versehenes Mehrfachgelenk für mehrere Elemente nach dem vorhergehenden Anspruch, **dadurch gekennzeichnet, dass** der zum Schiebebügelholm (4) gehörige Ring (1) und die Sitzhalterung (7) an der Außenseite eine Scheibe (19) aufweisen, in der eine Seilrolle (18) untergebracht ist, durch die das Seil (16) in einem Winkel verläuft.

## Revendications

1. Articulation multiple pour plusieurs éléments, avec des moyens de verrouillage, applicable à des poussettes, comprenant trois anneaux (1, 2, 3), deux correspondant aux pieds avant et arrière (5, 6) portant les roues, et un troisième correspondant au bras à guidon (4), intégrant le support (7) pour l'accouplement du siège, les bords des trois anneaux présentant des languettes et des rainures (8, 9), ces anneaux pivotant sur une tige cylindrique se déplaçant axialement avec les languettes et les rainures (11, 12) sur son bord externe qui se loge dans ceux des trois anneaux, pour verrouiller et déverrouiller la rotation.

2. Articulation multiple pour plusieurs éléments, avec des moyens de verrouillage, conformément à la revendication 1, **caractérisée en ce que** la tige cylindrique (10) est tubulaire et s'accouple à un ressort (15) qui pousse sa position de verrouillage active, la tige cylindrique étant unie axialement à un câble (16) qui coulisse dans le bras à guidon (4) et quand le câble est tiré, la tige cylindrique se déplace vers sa position de déverrouillage passive.

3. Articulation multiple pour plusieurs éléments, avec des moyens de verrouillage, conformément à la revendication précédente, **caractérisée en ce que** l'anneau (1) correspondant au bras a guidon (4) et le support du siège (7) présente sur sa face externe une plaque (19) portant une poulie (18) à travers laquelle le câble (16) coulisse à un angle donné.
